# EUROPEAN PATENT APPLICATION

(11) **EP 2 527 738 A2**
(43) Date of publication of application: **28.11.2012**
(21) Application number: 12169165.3
(22) Date of filing: 23.05.2012
(51) Int. Cl.: F23R 3/00, F23R 3/48

(54) **System and method for flow control in gas turbine engine**

(30) Priority: 24.05.2011 US 201113115051
(71) Applicant: General Electric Company, Schenectady, NY 12345 (US)
(72) Inventor: Melton, Patrick Bendict, Greenville, SC South Carolina 29615 (US); Cihlar, David William, Greenville, SC South Carolina 29615 (US); Rohrssen, Robert Joseph, Greenville, SC South Carolina 29615 (US); Khan, Abdul Rafey, Greenville, SC South Carolina 29615 (US)
(74) Representative: Cleary, Fidelma

(57) **Abstract**

A system includes a gas turbine combustor, which includes a combustion liner disposed about a combustion region, a flow sleeve disposed about the combustion liner, an air passage between the combustion liner and the flow sleeve, and an airflow guide vane (66) disposed in the air passage. The airflow guide vane (66) includes an upstream vane portion (102) and a downstream vane portion (104). The upstream vane portion (102) is oriented at an angle from an axial axis of the gas turbine combustor. The downstream vane portion (104) is aligned with the axial axis. The airflow guide vane (66) is configured to remove a circumferential swirl of an airflow upstream (112) of the airflow guide vane to straighten the airflow downstream (112) of the airflow guide vane (66) along the axial axis.

## Description

### BACKGROUND OF THE INVENTION

The subject matter disclosed herein relates to combustion chambers, and, more particularly, to flow control within gas turbine engines.

Various combustion systems include combustion chambers in which fuel and air combust to generate hot gases. For example, a gas turbine engine may include one or more combustion chambers that are configured to receive compressed air from a compressor, inject fuel into the compressed air, and generate hot combustion gases to drive the turbine engine. Each combustion chamber may include one or more fuel nozzles, a combustion zone within a combustion liner, a flow sleeve surrounding the combustion liner, and a gas transition duct. Compressed air from the compressor flows to the combustion zone through a gap between the combustion liner and the flow sleeve. The flow of the compressed air may include a rotating or circumferential swirl component. Unfortunately, flow disturbances may be created as the compressed air flows through the annular gap, thereby decreasing performance of the gas turbine engine.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a system including an airflow guide vane configured to straighten an airflow into an axial direction between a combustion liner and a flow sleeve of a gas turbine combustor. The airflow guide vane comprises an upstream vane portion and a downstream vane portion at an angle relative to one another.

The system may further include a gas turbine combustor, which includes a combustion liner disposed about a combustion region, a flow sleeve disposed about the combustion liner, an air passage between the combustion liner and the flow sleeve, the airflow guide vane is disposed in the air passage, the upstream vane portion is oriented at an angle from an axial axis of the gas turbine combustor and the downstream vane portion being aligned with the axial axis. The airflow guide vane is configured to remove a circumferential swirl of an airflow upstream of the airflow guide vane to straighten the airflow downstream of the airflow guide vane along the axial axis.

In another aspect, the invention resides in a method including straightening an airflow in an air passage between a combustion liner and a flow sleeve of a gas turbine combustor. Straightening includes receiving the airflow from a plurality of air inlets in a wall of the flow sleeve into the air passage, receiving the airflow at an upstream vane portion of an airflow guide vane, and turning the airflow from the upstream vane portion to a downstream vane portion of the airflow guide vane. The upstream and downstream vane portions are oriented at an angle relative to one another. Straightening also includes discharging the airflow from the airflow guide vane with a substantial reduction of swirl in the airflow.

### BRIEF DESCRIPTION OF THE DRAWINGS

Embodiments of the present invention will now be described, by way of example only, with reference to the accompanying drawings in which:
FIG. 1 is a block diagram of an embodiment of a turbine system having a combustor;
FIG. 2 is a cutaway side view of an embodiment of the turbine system as illustrated in FIG. 1, further illustrating details of the combustor;
FIG. 3 is a partial cross-sectional side view of an embodiment of the combustor as illustrated in FIG. 2, taken within line 3-3, illustrating a guide vane;
FIG. 4 is a cross-sectional top view of an embodiment of a guide vane and a plurality of fuel injectors taken along line 4-4 of FIG. 3;
FIG. 5 is a cross-sectional top view of an embodiment of a guide vane taken along line 5-5 of FIG. 3;
FIG. 6 is a cross-sectional top view of an embodiment of a guide vane taken along line 5-5 of FIG. 3;
FIG. 7 is a cross-sectional top view of an embodiment of a guide vane taken along line 5-5 of FIG. 3;
FIG. 8 is a front elevational view of an embodiment of a group of guide vanes taken along line 8-8 of FIG. 5;
FIG. 9 is a front elevational view of an embodiment of a group of guide vanes taken along line 8-8 of FIG. 5;
FIG. 10 is a front elevational view of an embodiment of a group of guide vanes taken along line 8-8 of FIG. 5;
FIG. 11 is a front elevational view of an embodiment of a group of guide vanes taken along line 8-8 of FIG. 5;
FIG. 12 is a cross-sectional top view of an embodiment of a guide vane and a plurality of fuel injectors taken along line 4-4 of FIG. 3;
FIG. 13 is a cross-sectional top view of an embodiment of a guide vane and a plurality of fuel injectors taken along line 4-4 of FIG. 3;
FIG. 14 is a cross-sectional top view of an embodiment of a guide vane and a plurality of fuel injectors taken along line 4-4 of FIG. 3; and
FIG. 15 is a cross-sectional top view of an embodiment of a guide vane and a plurality of fuel injectors taken along line 4-4 of FIG. 3.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed in detail below, the disclosed embodiments provide systems and methods for removing a circumferential swirl of an airflow using a guide vane to straighten the airflow downstream of the guide vane. For example, the airflow between a combustion liner and a flow sleeve of a gas turbine combustor of a gas turbine engine may include circumferential swirl at least partially due to the rotating blades of the compressor. The guide vane may include an upstream vane portion and a downstream vane portion. The upstream vane portion may be oriented at an angle from an axial axis of the gas turbine combustor and the downstream vane portion may be aligned with the axial axis. In certain embodiments, the guide vane may have an aerodynamic shape, such as an airfoil shape. In addition, the guide vane may include a leading edge and a trailing edge, with curved surfaces extending from the leading edge to the trailing edge. In certain embodiments, the curved surfaces may have an aerodynamic shape. For example, the curved surfaces may first diverge and then converge toward one another (e.g., diverging-converging surfaces). In further embodiments, structures, such as a cross-fire tube or fuel injector, may be disposed downstream of the guide vane and the structures may create wakes by obstructing the airflow. By removing the circumferential swirl from the airflow, the guide vane may reduce the wakes downstream from the structures. Further, in certain embodiments, the guide vane may include at least one vanelet configured to straighten the airflow into a horizontal direction or a radial direction between the combustion liner and the flow sleeve.

The disclosed embodiments reduce the circumferential swirl from the airflow to reduce the wakes from the structures downstream of the guide vane to provide several benefits. For example, without the disclosed embodiments, fuel injected downstream of the structures may be pulled into the wake. The fuel may accumulate in the wake and cause flame holding, thereby decreasing performance of the gas turbine engine. In addition, the presence of wakes may result in a higher pressure drop across the combustion liner. The presently disclosed embodiments employ the guide vane to reduce wakes and avoid the disadvantages of other methods of wake reduction. For example, using the guide vane may reduce the possibility of flame holding, increase the gas turbine engine performance, and decrease the pressure drop across the combustion liner. In addition, the guide vane may be less expensive, less complicated, easier to manufacture and install, and more reliable than other methods of wake reduction. Thus, use of the disclosed guide vanes is particularly well suited for reducing wakes in gas turbine engines and other combustion systems.

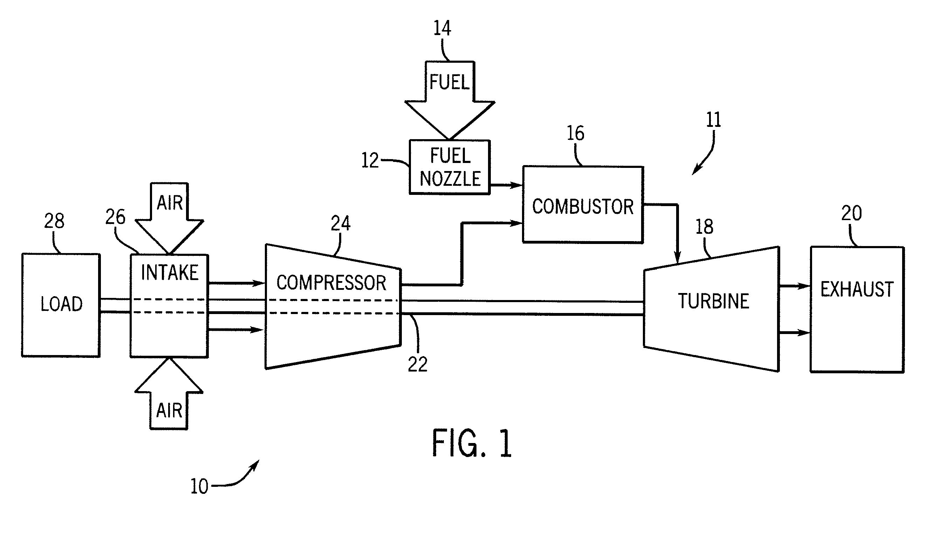

FIG. 1 is a block diagram of an embodiment of a turbine system 10 having a gas turbine engine 11. As described in detail below, the disclosed turbine system 10 employs one or more combustors 16 with an improved design to remove circumferential swirl to reduce wakes within an air supply passage of the combustor 16. The turbine system 10 may use liquid or gas fuel, such as natural gas and/or a synthetic gas, to drive the turbine system 10. As depicted, one or more fuel nozzles 12 intake a fuel supply 14, partially mix the fuel with air, and distribute the fuel and air mixture into the combustor 16 where further mixing occurs between the fuel and air. The air-fuel mixture combusts in a chamber within the combustor 16, thereby creating hot pressurized exhaust gases. The combustor 16 directs the exhaust gases through a turbine 18 toward an exhaust outlet 20. As the exhaust gases pass through the turbine 18, the gases force turbine blades to rotate a shaft 22 along an axis of the turbine system 10. As illustrated, the shaft 22 is connected to various components of the turbine system 10, including a compressor 24. The compressor 24 also includes blades coupled to the shaft 22. As the shaft 22 rotates, the blades within the compressor 24 also rotate, thereby compressing air from an air intake 26 through the compressor 24 and into the fuel nozzles 12 and/or combustor 16. The shaft 22 may also be connected to a load 28, which may be a vehicle or a stationary load, such as an electrical generator in a power plant or a propeller on an aircraft, for example. The load 28 may include any suitable device capable of being powered by the rotational output of turbine system 10.

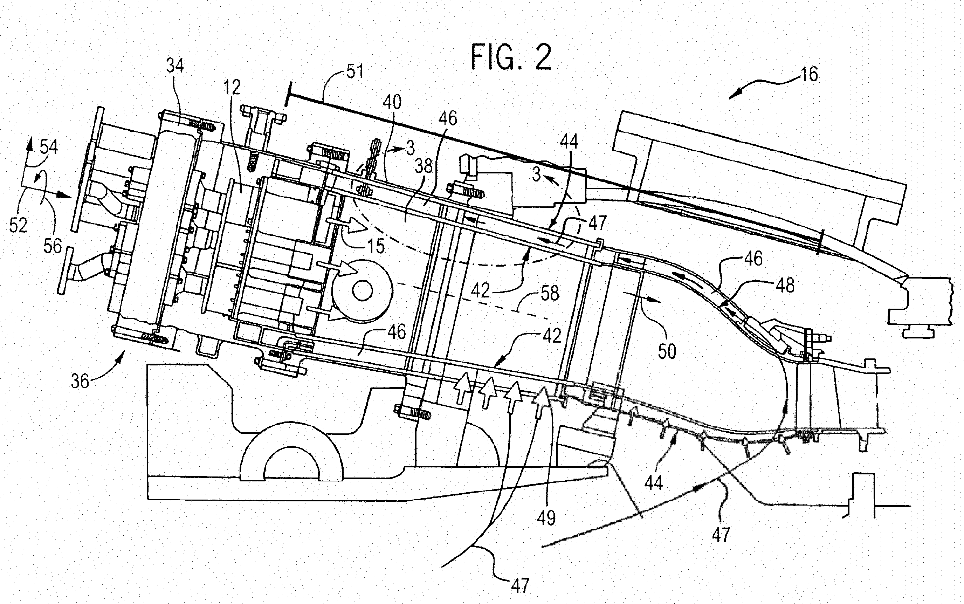

FIG. 2 is a cutaway side view of an embodiment of the combustor 16 of the gas turbine engine 11, as illustrated in FIG. 1. In the following discussion, reference may be made to an axial direction or axis 52, a radial direction or axis 54, and a circumferential direction or axis 56, relative to a longitudinal axis 58 of the combustor 16. As illustrated, one or more fuel nozzles 12 are located inside the combustor 16, wherein each fuel nozzle 12 is configured to partially premix air and fuel within intermediate or interior walls of the fuel nozzles 12 upstream of the injection of air, fuel, or an air-fuel mixture into the combustor 16. For example, each fuel nozzle 12 may divert fuel into air passages, thereby partially premixing a portion of the fuel with air to reduce high temperature zones and nitrogen oxide (NOₓ) emissions. Further, the fuel nozzles 12 may inject a fuel-air mixture 15 into the combustor 16 in a suitable ratio for optimal combustion, emissions, fuel consumption, and power output.

As illustrated in FIG. 2, the plurality of fuel nozzles 12 is attached to an end cover 34, near a head end 36 of the combustor 16. Compressed air and fuel are directed through the end cover 34 and the head end 36 to each of the fuel nozzles 12, which distribute the fuel-air mixture 15 into a combustion chamber 38 of the combustor 16. The combustion chamber 38, or combustion region, is generally defined by a combustion casing 40, a combustion liner 42, and a flow sleeve 44. As shown in FIG. 2, the flow sleeve 44 is disposed about the combustion liner 42. In certain embodiments, the flow sleeve 44 and the combustion liner 42 are coaxial with one another along the axis 58 to define a hollow annular space 46, or annular air passage, which may enable passage of air 47 for cooling and for entry into the head end 36 and the combustion chamber 38. The hollow annular space 46 may be defined by an axial length 51. In certain embodiments, the air may enter through one or more air inlets 49 formed through a wall of the flow sleeve 44. As discussed below, one or more guide vanes may be disposed in the hollow annular space 46 to remove circumferential 56 swirl to reduce the wakes associated with structures in the hollow annular space 46. The guide vanes may be located near the head end 36, the air inlets 49, or somewhere between the head end 36 and the air inlets 49. For example, the guide vanes may be located at approximately 10 percent, 25 percent, 50 percent, 75 percent, or 90 percent of the axial length 51 as measured from the head end 36. In addition, an upstream portion of the guide vane may be oriented at an angle from the axial axis 52, 58 of the combustor 16 and a downstream vane portion may be aligned with the axial axis 52, 58 to straighten the airflow downstream of the guide vane along the axial axis 52, 58. In this manner, the guide vanes help improve the flow, air-fuel mixing, and combustion downstream of the guide vanes. For example, downstream of the guide vanes, the fuel nozzles 12 inject fuel and air into the combustion chamber 38 to generate hot combustion gases, which then flow through the transition piece 48 to the turbine 18, as illustrated by arrow 50. The combustion gases then drive rotation of the turbine 18 as discussed above.

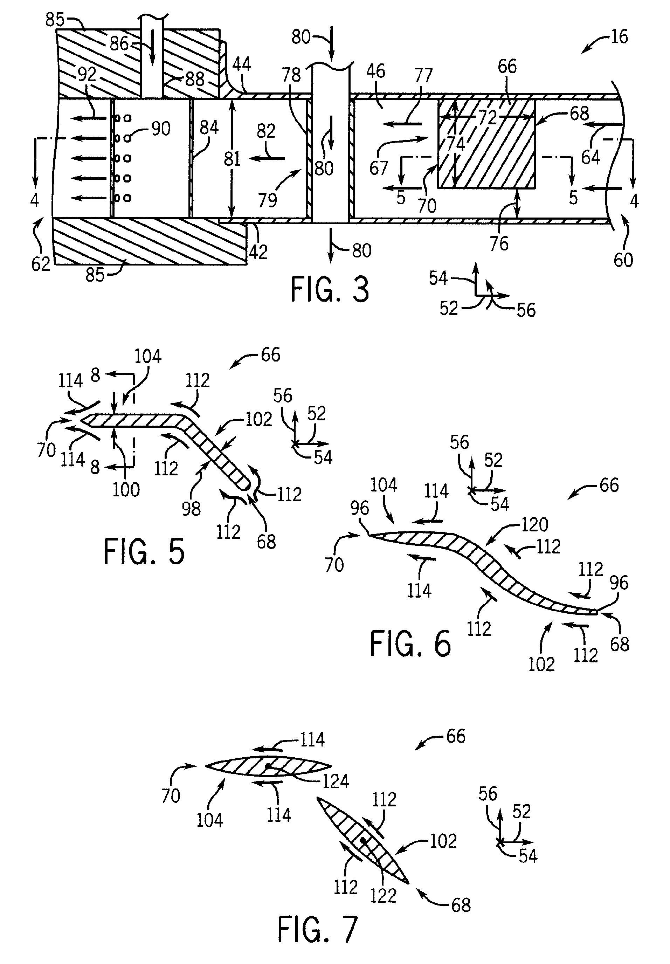

FIG. 3 is a partial cross-sectional side view of an embodiment of the combustor 16 of FIG. 2 taken within line 3-3. As illustrated, the combustor 16 includes an upstream side 60 that receives a compressed airflow 64, and a downstream side 62 that outputs the compressed airflow 64 to the head end 36. Specifically, an airflow 64 enters the upstream side 60 of the annular space 46. Moving downstream from the upstream side 60, a guide vane 66 extends radially 54 between the combustion liner 42 and the flow sleeve 44. The guide vane 66 is configured to remove a circumferential 56 swirl of the airflow 64 upstream of the guide vane 66. In addition, the guide vane 66 obstructs the airflow 64 flowing through the annular space 46, creating a wake in a first wake region 67 located downstream from the guide vane 66. The first wake region 67 is a region of recirculating flow immediately behind the guide vane 66, caused by the flow of surrounding fluid around the guide vane 66.

As shown in FIG. 3, the guide vane 66 is coupled to the flow sleeve 44. In other embodiments, the guide vane 66 may be coupled to the combustion liner 42. In further embodiments, the guide vane 66 may be coupled to both the combustion liner 42 and the flow sleeve 44. Thus, the guide vane 66 may have a radial 54 height that is less than or equal to a radial distance 81 between the combustion liner 42 and the flow sleeve 44. The guide vane 66 may be coupled to the combustion liner 42 and/or the flow sleeve 44 using various techniques, such as, but not limited to, welding, brazing, adhesives, bolting, screws, mechanical joints, or other suitable fasteners. For example, a slot may be cut into the flow sleeve 44, the guide vane 66 may be inserted through the slot, and the guide vane 66 may then be welded into place. In other embodiments, the guide vane 66 may be formed, or machined, from the combustion liner 42 and/or the flow sleeve 44.

In the illustrated embodiment, the guide vane 66 may include a leading edge 68 facing the upstream side 60 and a trailing edge 70 facing the downstream side 62. The leading edge 68 may also be referred to as the front end, and the trailing edge 70 may be referred to as the back end. In addition, the guide vane 66 is defmed by an axial length 72, which may be adjusted to provide a desired reduction of circumferential swirl of the airflow 64. For example, a guide vane 66 with a longer axial length 72 may provide greater reduction of circumferential 56 swirl than a guide vane 66 with a shorter axial length 72. In addition, the guide vane 66 is defmed by a radial height 74, which may be adjusted to provide the desired reduction of circumferential swirl. For example, a guide vane 66 with a longer radial height 74 may provide greater reduction of circumferential 56 swirl than a guide vane 66 with a shorter radial height 74. In certain embodiments, a guide vane gap 76 may exist radially 54 between the guide vane 66 and the combustion liner 42 and/or the flow sleeve 44. The guide vane gap 76 may allow for thermal expansion and/or movement of the combustion liner 42 and/or the flow sleeve 44 during operation of the gas turbine engine 11. The guide vane gap 76 may be omitted in embodiments in which the guide vane 66 extends completely between the combustion liner 42 and the flow sleeve 44.

As described in more detail below, the airflow 64 encounters the guide vane 66 at the leading edge 68. After the guide vane 66 removes the circumferential 56 swirl from the airflow 64, a straightened airflow 77 leaves the guide vane 66 from the trailing edge 70. In other words, the guide vane 66 has substantially reduced the amount of circumferential 56 swirl to produce the straightened airflow 77 substantially inline with the axial direction 52. Moving downstream from the guide vane 66, the straightened airflow 77 encounters a structure 78 extending between the combustion liner 42 and the flow sleeve 44. The structure 78 obstructs the straightened airflow 77 flowing through the annular space 46, creating a wake in a second wake region 79 located downstream from the structure 78. The second wake region 79 is a region of recirculating flow immediately behind the structure 78, caused by the flow of surrounding fluid around the structure 78. The structure 78 may include, but it not limited to, a cross-fire tube, a flame detector, a spark plug, a boss, a spacer, a pressure probe, a late lean injector, a sensor, or any similar object that may be found in the annular space 46 of the combustor 16 and that is capable of obstructing the straightened airflow 77. In the illustrated embodiment, the structure 78 corresponds to a cross-fire tube, which extends between the combustor 16 and another combustor of the gas turbine engine 11. In other embodiments, the structure 78 may correspond to other internal flow passages similar to the cross-fire tube. Although the following discussion refers to the structure 78 as the cross-fire tube, in various embodiments, the structure 78 may correspond to any of the examples of structures 78 listed above. Returning to FIG. 3, a flame 80 from the other combustor is directed to the combustor 16 to ignite the air-fuel mixture in the combustion chamber 38.

When the airflow 64 flowing toward the guide vane 66 encounters the leading edge 68, the airflow 64 divides into two flows, as described in more detail below. The two divided flows of the airflow 64 flow along the surfaces of the guide vane 66 and recombine near the trailing edge 70 to form the straightened airflow 77 in the first wake region 67 extending from the guide vane 66. When the straightened airflow 77 encounters the cross-fire tube 78, the removal of the circumferential 56 swirl by the guide vane 66 may also reduce a wake in a downstream airflow 82 in the second wake region 79 extending from the cross-fire tube 78. In certain embodiments, the downstream airflow 82 may encounter one or more fuel injectors 84 disposed downstream of the cross-fire tube 78, the combustion liner 42, and the flow sleeve 44. Specifically, the fuel injectors 84 may be located in an annulus formed by a cap 85. In certain embodiments, the fuel injector 84 may be a quaternary injector that injects a portion of a fuel 86 into the downstream airflow 82 upstream from the fuel nozzles 12. The fuel 86 may be carried to the fuel injector 84 through a fuel manifold 88. In certain embodiments, one or more fuel openings 90 may be disposed in the fuel injector 84 facing toward the downstream side 62 of the combustor 16. The fuel 86 may mix with the downstream airflow 82 to form an air-fuel mixture 92 that then flows to the fuel nozzles 12. Although the guide vane 66 is shown near the fuel injectors 84 in FIG. 3, in other embodiments, the guide vane 66 may be located further away from the head end 36 and closer to the upstream side 60 of the combustor 16. For example, in certain embodiments, the flow sleeve 44 may include one or more air inlets 49 formed near the upstream side 60 of the combustor 16. One or more guide vanes 66 may be disposed adjacent to the one or more air inlets 49 of the flow sleeve 44 to straighten the airflow 64 as it enters the annular space 46. Thus, the straightened airflow 77 may flow for a longer distance through the annular space 46 before reaching the fuel injectors 84.

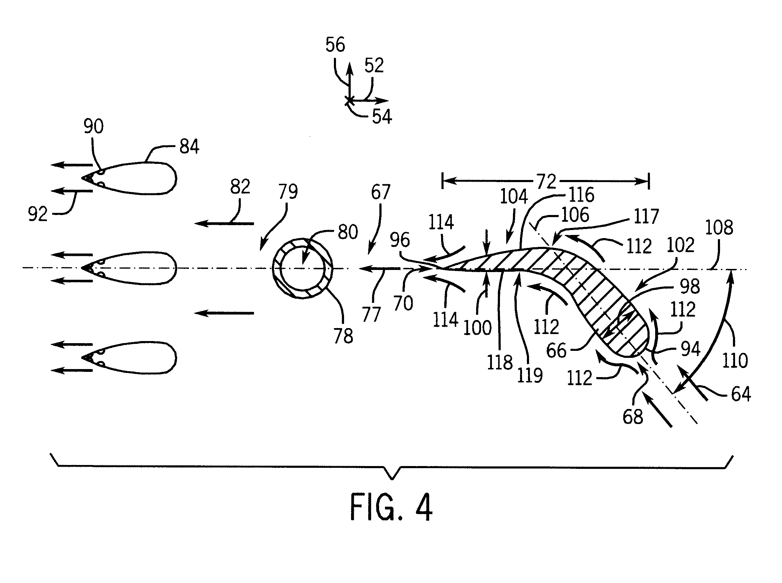

FIG. 4 is a top cross-sectional view of an embodiment of the guide vane 66 and the fuel injectors 84 taken along the line labeled 4-4 in FIG. 3. As shown in FIG. 4, the guide vane 66 has an aerodynamic cross-sectional shape, such as an airfoil shape. In other embodiments, as discussed in detail below, the guide vane 66 may have other aerodynamic cross-sectional shapes, such as oval, tapered, or generally diverging-converging surfaces. For example, in some embodiments, an upstream width 98 of the guide vane 66 is greater than a downstream width 100. In other embodiments, the upstream width 98 may be less than the downstream width 100. In addition, the guide vane 66 has a curved shape 94 near the leading edge 68 and a tapered shape 96 near the trailing edge 70. The shape of the guide vane 66, the upstream and downstream widths 98 and 100, and other characteristics of the guide vane 66 (e.g., length 72, ratio of length 72 to width 98, ratio of length 72 to width 100, height 74, surface texture, and so forth) may be adjusted to achieve the desired reduction of the wake in the straightened airflow 77 and/or the downstream airflow 82. In the illustrated embodiment, the cross-fire tube 78 has a circular cross-sectional shape. In other embodiments, the cross-fire tube 78 may have other cross-sectional shapes, such as an aerodynamic cross-section, an airfoil cross-section, a rectangular cross-section, or any other suitable cross-sectional shape.

In the illustrated embodiment, the guide vane 66 includes an upstream vane portion 102 and a downstream vane portion 104. As shown in FIG. 4, the upstream and downstream vane portions 102 and 104 are coupled to one another. In the illustrated embodiment, the guide vane 66 is a one-piece structure. In other embodiments, the upstream and downstream vane portions 102 and 104 may be separate from one another. In those embodiments, the guide vane 66 is a two-piece structure. In further embodiments, the guide vane 66 may include more than two portions. In the illustrated embodiment, the upstream portion 102 is aligned with an upstream portion axis 106. The downstream portion 104 is aligned with an axial axis 58, 108 of the combustor 16. Thus, the upstream portion 102 is oriented at an angle 110 from the axial axis 108. For example, the angle 110 may be between approximately 5 degrees to 60 degrees, 10 degrees to 50 degrees, or 20 degrees to 40 degrees. Thus, the airflow 64 is turned by the guide vane 66 by a value approximately equal to the value of the angle 110.

As shown in FIG. 4, the airflow 64 may have a degree of circumferential 56 swirl generally aligned with the upstream portion axis 106. Upon reaching the leading edge 68 of the guide vane 66, the airflow 64 divides into upstream flows 112 around the guide vane 66. The upstream flows 112 flow along opposite curved surfaces 116 and 118 of the guide vane 66 and downstream flows 114 combine to form the straightened airflow 77 in the first wake region 67. Thus, the combined downstream flows 114 fill the wake region 67 downstream of the guide vane 66, thereby reducing flow separation and reducing lateral spreading of the wake. In other words, without the guide vane 66, the wake region 67 may include a low velocity region due to a significant gap between the downstream flows 114 at the trailing edge 70. In the illustrated embodiment, the downstream flows 114 gradually converge with one another to eliminate such a gap, thereby reducing the possibility of any low velocity region downstream of the trailing edge 70. In other words, the downstream flows 114 are guided toward one another by the guide vane 66 to combine directly downstream of the trailing edge 70 to fill the wake region 67.

The guide vane 66 shown in FIG. 4 includes a first surface 116 disposed on a first side 117 of the guide vane 66. Similarly, the guide vane 66 includes a second surface 118 disposed on a second side 119 of the guide vane 66. The first and second sides 117 and 119 of the guide vane 66 are circumferentially 56 opposite from one another. Together, the first and second surfaces 116 and 118 make up an aerodynamic flow control surface of the guide vane 66. As shown in FIG. 4, the aerodynamic flow control surface curves around the guide vane 66 from the leading edge 68 to the trailing edge 70. The first surface 116 gradually turns (e.g., curves) between the leading edge 68 and the trailing edge 70 on the first side 117 of the guide vane 66. Similarly, the second surface 118 gradually turns (e.g., curves) between the leading edge 68 and the trailing edge 70 on the second side 119 of the guide vane 66. In the illustrated embodiment, the first and second surfaces 116 and 118 first diverge and then converge toward one another (e.g., diverging-converging surfaces) along the upstream and downstream flows 112 and 114 from the leading edge 68 toward the trailing edge 70. As the downstream flows 114 aerodynamically combine near the trailing edge 70, they energize the wake region 67 by filling the region 67 with high velocity airflow. In this manner, the guide vane 66 substantially reduces or eliminates a low velocity recirculation zone downstream of the guide vane 66.

As further illustrated in FIG. 4, the annular space 46 may include more than one fuel injector 84. Each of the fuel injectors 84 may have an aerodynamic cross-sectional shape. Such a configuration of the fuel injectors 84 may reduce a wake in the air-fuel mixture 92 downstream of the fuel injectors 84. In addition, each of the fuel injectors 84 may be aligned with the axial axis 52, 108. Alignment of the straightened airflow 77 with the axial axis 108, and thereby the fuel injectors 84, may offer several benefits. For example, less of the fuel 86 may be pulled into the second wake region 79 behind the cross-fire tube 78. This may reduce the possibility of flame holding of the gas turbine engine 11 and/or enable greater fuel injection efficiency for increased performance of the gas turbine engine 11. In addition, the overall pressure drop through the annular space 46 may be reduced through removal of circumferential swirl 56 of the airflow 64 by the guide vane 66. Thus, use of the guide vane 66 may improve uniformity of airflow and air-fuel mixing upstream of the head end 36, thereby improving airflow and air-fuel mixing in the fuel nozzles 12.

FIG. 5 is a top cross-sectional view of an embodiment of the guide vane 66 taken along line 5-5 of FIG. 3. As shown in FIG. 5, the guide vane 66 is a one-piece structure that includes the upstream vane portion 102 and the downstream vane portion 104. In addition, the shape of the guide vane 66 shown in FIG. 5 is different from the shape of the guide vane 66 shown in FIG. 4. For example, the upstream width 98 is approximately the same as the downstream width 100. Thus, the illustrated embodiment of the guide vane 66 may have a less aerodynamic shape than the embodiment shown in FIG. 4. Thus, the guide vane 66 shown in FIG. 5 may not reduce the wake in the wake region 67 as much as the guide vane 66 shown in FIG. 4. However, the illustrated embodiment of the guide vane 66 does remove circumferential swirl 56 from the airflow 64, because of the alignment of the upstream vane portion 102 with the airflow 64 and the alignment of the downstream vane portion 104 with the axial axis 52, 108. In addition, the simpler shape of the guide vane 66 shown in FIG. 5 may be easier to manufacture than the guide vane 66 shown in FIG. 4.

FIG. 6 is a top cross-sectional view of an embodiment of the guide vane 66 taken along line 5-5 of FIG. 3. As shown in FIG. 6, the guide vane 66 includes upstream and downstream vane portions 102 and 104. In addition, the guide vane 66 includes a middle vane portion 120 in between the upstream and downstream vane portions 102 and 104. Thus, the guide vane 66 may have an S-shape. In other words, the guide vane 66 has a first S-curve in one direction and a second S-curve in the opposite direction. Such a shape of the guide vane 66 may be used to accommodate any structure 78, interference, or air inlet 49 in the annual space 46, for example. The upstream vane portion 102 may be aligned with the airflow 64 and the downstream vane portion 104 may be aligned with the axial axis 52, 108. Thus, the middle vane portion 120 may be aligned at some point in between the alignment of the upstream and downstream vane portions 102 and 104. Such a configuration of the guide vane 66 may improve the aerodynamic performance of the guide vane 66. Specifically, the upstream flows 112 may move in a more gradual manner over the surfaces of the guide vane 66, thereby reducing turbulence caused as the upstream flows 112 change direction. Thus, the illustrated embodiment of the guide vane 66 may provide greater reduction of the wake in the wake region 67. In addition, the guide vane 66 has tapered shapes 96 at both the leading and trailing edges 68 and 70, which may further improve the aerodynamic performance of the guide vane 66 in certain situations. In further embodiments, the guide vane 66 may include more than three portions, such as four, five, six, or more portions.

FIG. 7 is a top cross-sectional view of an embodiment of the guide vane 66 taken along line 5-5 of FIG. 3. As shown in FIG. 7, the upstream and downstream vane portions 102 and 104 are not coupled to one another. Thus, the illustrated embodiment of the guide vane 66 is a two-piece structure. Such a configuration of the guide vane 66 may offer several advantages. For example, the upstream vane portion 102 may be rotatable about an upstream axis 122 to accommodate changes in the alignment of the airflow 64. The upstream vane portion 102 may be rotated during maintenance outages of the combustor 16 or the upstream vane portion 102 may be coupled to an actuator to enable the upstream vane portion 102 to be rotated during operation of the combustor 16. Similarly, in other embodiments, the downstream vane portion 104 may be rotatable about a downstream axis 124. The downstream vane portion 104 may be positioned during outages of the combustor 16 or during operation of the combustor 16 using an actuator, or similar mechanism. In addition, a two-piece structure of the guide vane 66 may allow for the upstream and downstream vane portions 102 and 104 to be repaired or replaced separately from one another. Further, the distance separating the upstream and downstream vane portions 102 and 104 may be adjusted to obtain the desired reduction of the wake in the wake region 67. In certain embodiments, the guide vane 66 may include more than two separate portions, such as three, four, five, six, or more separate portions.

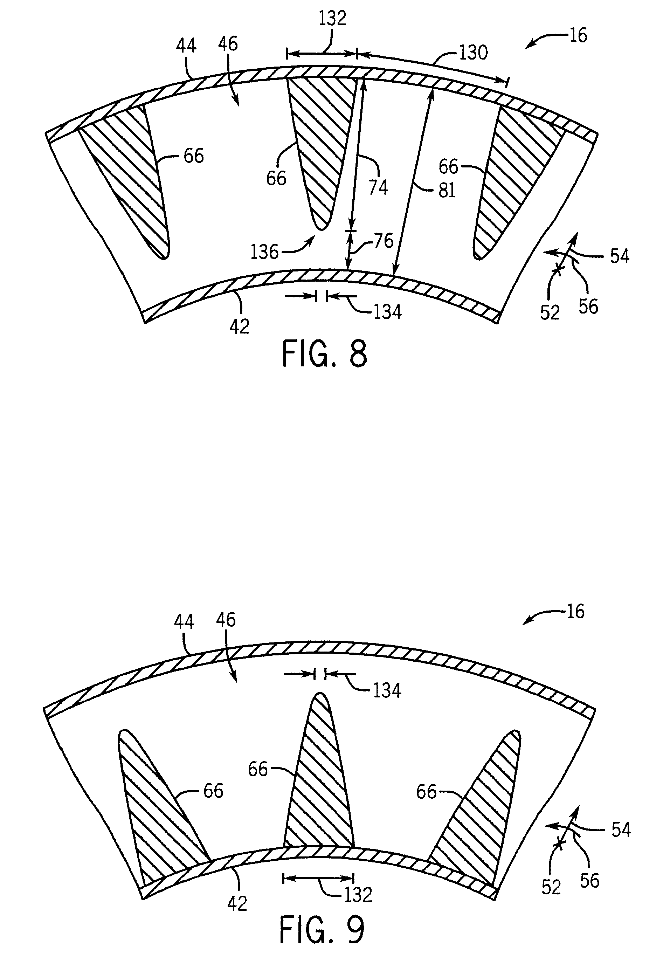

FIG. 8 is a front elevational view of an embodiment of the guide vane 66 taken along line 8-8 of FIG. 5. As shown in FIG. 8, the guide vanes 66 are coupled to the flow sleeve 44. As discussed in detail below, the guide vanes 66 may also be coupled to the combustion liner 42. In the illustrated embodiment, the guide vanes 66 are separated from one another by a separation distance 130. By reducing the separation distance 130, more guide vanes 66 may be disposed about the circumference of the flow sleeve 44. Similarly, by increasing the separation distance 130, fewer guide vanes 66 may be disposed about the circumference of the flow sleeve 44. Increasing the number of guide vanes 66 in the annular space 46 may increase the amount of circumferential 56 swirl removed from the airflow 64. In addition, the guide vanes 66 may be defined by a first circumferential cross-sectional width 132 and a second circumferential cross-sectional width 134, which are different from one another as shown in FIG. 8. Specifically, the illustrated first circumferential cross-sectional width 132 is greater than the second circumferential cross-sectional width 134. In other words, the guide vanes 66 have a roughly triangular, or tapered, cross-sectional shape in the radial direction. Such a configuration of the guide vane 66 may direct more of the airflow 64 toward the combustion liner 42 and less toward the flow sleeve 44, which may provide greater cooling of the combustion liner 42, for example. In other embodiments, the first and second circumferential cross-sectional widths 132 and 134 may be approximately the same or the first circumferential cross-sectional width 132 may be less than the second circumferential cross-sectional width 134. In such embodiments, the guide vanes 66 may have other cross-sectional shapes, such as, but not limited to, rectangles, squares, trapezoids, or other suitable shapes. In addition, tips 136 of the guide vanes 66 may be pointed, curved, or flat, for example.

FIG. 9 is a front elevational view of an embodiment of the guide vane 66 taken along line 8-8 of FIG. 5. As shown in FIG. 9, the guide vanes 66 are coupled to the combustion liner 42. Such a configuration may be used where it is easier or simpler to install the guide vanes 66 to the combustion liner 42 instead of the flow sleeve 44. In addition, disposing the guide vanes 66 on the combustion liner 42 may help to prevent any interference with the air inlets 49 formed in the flow sleeve 44. Thus, the flow sleeve 44 may include more air inlets 49 or alignment of the guide vanes 66 with the air inlets 49 may be facilitated. As with previous embodiments, the guide vane 66 helps to remove circumferential 56 swirl from the airflow 64 in the annual space 46. Positioning the guide vanes 66 on the combustion liner 42 may further reduce circumferential 56 swirl in embodiments in which air enters through the air inlets 49 formed in the flow sleeve 44. In addition, because the guide vanes 66 are coupled to the combustion liner 42, the vanes 66 may help provide additional cooling for the combustion liner 42. Specifically, the guide vanes 66 may act as heat sinks providing additional surface area for the airflow 64 to remove heat from the combustion liner 42. In the illustrated embodiment, the first circumferential cross-sectional width 132 is greater than the second circumferential cross-sectional width 134. In other respects, the guide vanes 66 shown in FIG. 9 are similar to those shown in FIG. 8.

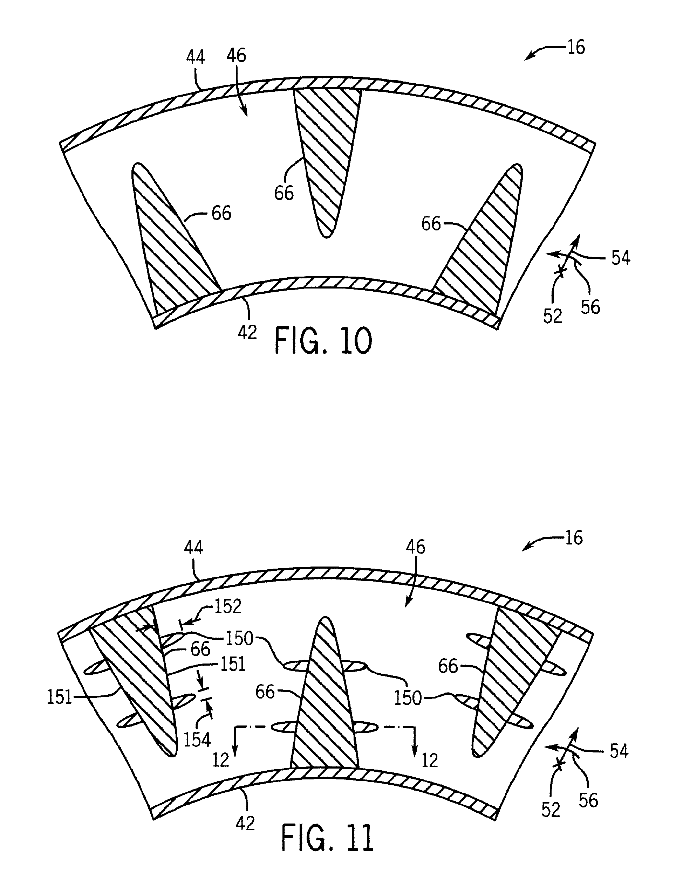

FIG. 10 is a front elevational view of an embodiment of the guide vane 66 taken along line 8-8 of FIG. 5. As shown in FIG. 10, the guide vanes 66 are coupled alternately to the combustion liner 42 and the flow sleeve 44. Such a configuration may be used to help reduce circumferential 56 swirl near both the combustion liner 42 and the flow sleeve 44. In addition, the airflow 64 may be directed to both the combustion liner 42 and the flow sleeve 44 to provide cooling of both components of the combustor 16. Further, the alternating configuration of the guide vanes 66 provides a more tortuous path for any circumferential 56 swirl of the airflow 64. In other respects, the guide vanes 66 shown in FIG. 10 are similar to previous embodiments.

FIG. 11 is a front elevational view of an embodiment of the guide vane 66 taken along line 8-8 of FIG. 5. As shown in FIG. 10, the guide vanes 66 include one or more vanelets 150 coupled to radial surfaces 151 of the guide vanes 66. The vanelets 150 may help to straighten the airflow 64 relative to the radial direction 54 between the combustion liner 42 and the flow sleeve 44. In other words, the vanelets 150 may help to prevent the airflow 64 from flowing radially 54 toward the combustion liner 42 or the flow sleeve 44. Thus, the vanelets 150 may be used to distribute the airflow 64 evenly throughout the annular space 46. Use of the vanelets 150 may be more useful near the upstream side 60 of the combustor 16, away from the head end 36, where the airflow 64 may be less uniformly distributed in the radial direction 54. In certain embodiments, the orientation of the vanelets 150 may be used to direct more of the airflow toward either the combustion liner 42 or the flow sleeve 44. Thus, the vanelets 150 may be aligned with the axial axis 52, the vanelets 150 may be angled toward the liner 42, or the vanelets 150 may be angled toward the flow sleeve 44 in the downstream direction of airflow. In the illustrated embodiment, the vanelets 150 are defmed by a vanelet width 152 and a vanelet thickness 154, which may be adjusted to provide a suitable amount of radial 54 straightening of the airflow 64. In addition, the number of vanelets 150 and spacing between the vanelets 150 may be adjusted to affect the radial straightening of the airflow 64. In other respects, the guide vanes 66 shown in FIG. 11 are similar to previous embodiments.

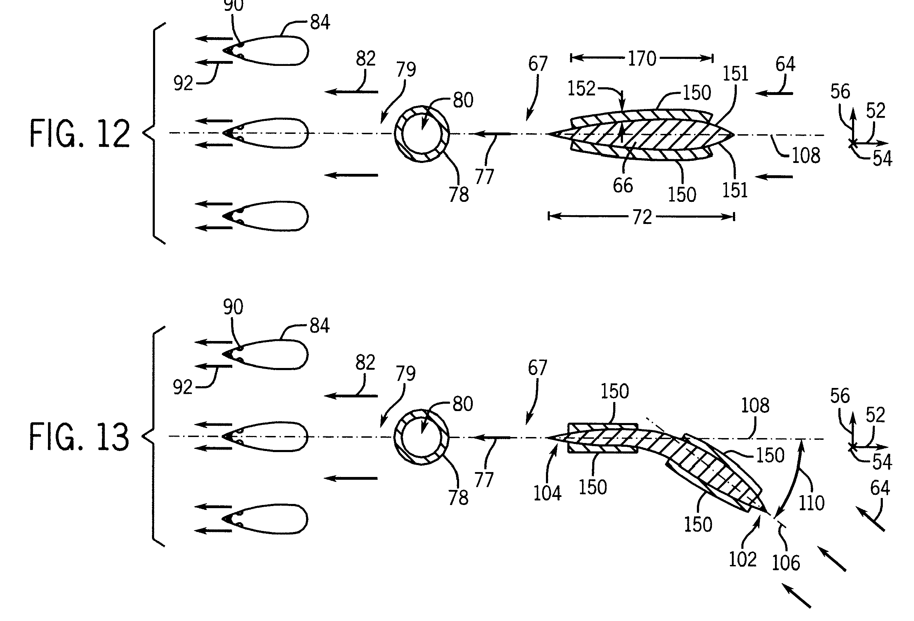

FIG. 12 is a cross-sectional top view of an embodiment of the guide vane 66 and the fuel injectors 84 taken along line 4-4 of FIG. 3. As shown in FIG. 12, the guide vane 66 includes the vanelets 150 coupled to opposite sides 151 of the guide vane 66. In addition, the vanelet 150 is defined by a vanelet length 170, which is less than the axial length 72 of the guide vane 66. In the illustrated embodiment, the vanelets 150 help to straighten the airflow 64 to form the straightened airflow 77 downstream of the guide vane 66. For example, the vanelets 150 may help to straighten the airflow in the axial direction 52 by blocking airflow in the radial direction 54. In addition, the vanelets 150 may help remove circumferential 56 swirl from the airflow 64. Further, in certain embodiments, the cross-sectional area of the structure 78 may vary in the radial direction 54. For example, the cross-fire tube 78, or other structure, may be wider near the flow sleeve 44 and narrower near the combustion liner 42. In such an embodiment, the vanelets 150 may be used to direct the straightened airflow 77 in the radial direction 54 away from the wider portions of the structure 78. In other words, the vanelets 150 may be angled toward the narrower portions of the structure 78.

FIG. 13 is a cross-sectional top view of an embodiment of the guide vane 66 and the fuel injectors 84 taken along line 4-4 of FIG. 3. As shown in FIG. 13, the guide vane 66 includes the upstream and downstream vane portions 102 and 104. The upstream vane portion 102 is aligned with the upstream portion axis 106 and the downstream vane portion 104 is aligned with the axial axis 52, 108 of the combustor 16. The upstream portion axis 106 is oriented at the angle 110 from the axial axis 108. In addition, both the upstream and downstream vane portions 102 and 104 include vanelets 150, which may help to straighten the airflow 64 relative to the radial direction 54 between the combustion liner 42 and the flow sleeve 44. In further embodiments, each of the portions of the guide vane 66 may include one or more vanelets 150, whether the guide vane 66 is a one-piece structure or multi-piece structure.

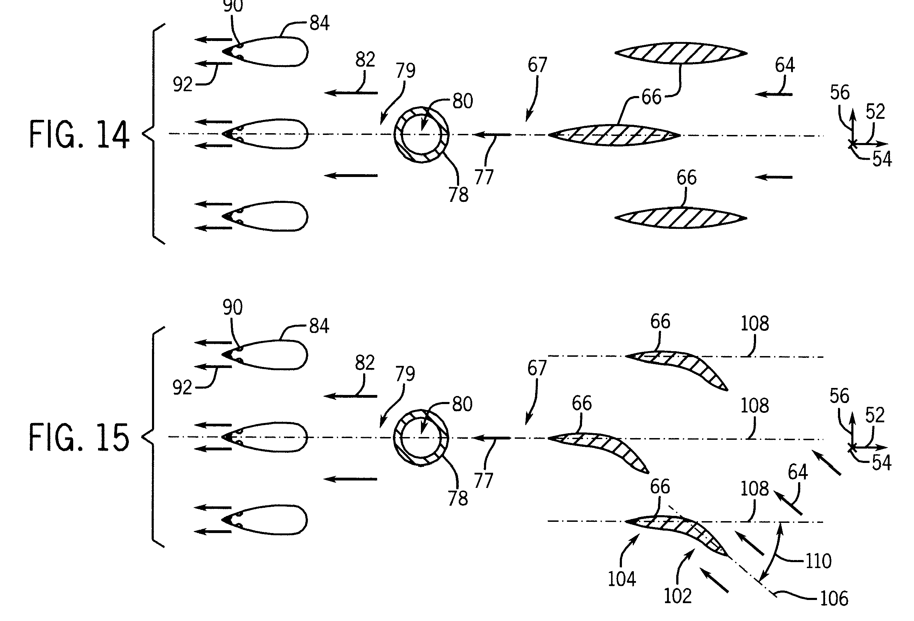

FIG. 14 is a cross-sectional top view of an embodiment of the guide vane 66 and the fuel injectors 84 taken along line 4-4 of FIG. 3. As shown in FIG. 14, the guide vanes 66 are axially staggered from one another relative to the axial axis 52. Such a configuration of the guide vanes 66 may help to straighten the airflow 64 and remove any circumferential 56 swirl in the airflow 64. The amount of axial staggering and/or spacing between the guide vanes 66 may be adjusted to provide for suitable straightening and/or reduction of circumferential swirl of the airflow 64. In the illustrated embodiment, the guide vanes 66 are shown with an aerodynamic shape, such as an airfoil shape. In other embodiments, the guide vanes 66 may have other aerodynamic cross-sectional shapes, such as oval, tapered, or generally diverging-converging surfaces. In further embodiments, the guide vanes 66 may include one or more vanelets 150 to straighten the airflow 64 relative to the radial direction 54 between the combustion liner 42 and the flow sleeve 44. In further embodiments, patterns of the guide vanes 66 other than the staggered pattern shown in FIG. 14 may be used to remove circumferential 56 swirl from the airflow 64.

FIG. 15 is a cross-sectional top view of an embodiment of the guide vane 66 and the fuel injectors 84 taken along line 4-4 of FIG. 3. As shown in FIG. 15, the guide vanes 66 include the upstream and downstream vane portions 102 and 104. The upstream vane portion 102 is aligned with the upstream portion axis 106 and the downstream vane portion 104 is aligned with the axial axis 52, 108 of the combustor 16. The upstream portion axis 106 is oriented at the angle 110 from the axial axis 108. Thus, the guide vanes 66 are configured to remove circumferential 56 swirl of the airflow 64 upstream of the guide vanes 66 to produce the straightened airflow 77 downstream of the guide vanes 66 along the axial axis 108. In addition, the guide vanes 66 are axially staggered from one another relative to the axial axis 52. Such a configuration of the guide vanes 66 may help to further straighten the airflow 64 and remove any circumferential 56 swirl in the airflow 64. The amount of axial staggering and/or spacing between the guide vanes 66 may be adjusted to provide the desired straightening and reduction of circumferential 56 swirl of the airflow 64. In certain embodiments, the guide vanes 66 may include one or more vanelets 150 to straighten the airflow 64 relative to the radial direction 54 between the combustion liner 42 and the flow sleeve 44. In addition, other patterns, or layouts, of the guide vanes 66 may be used in further embodiments.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
an airflow guide vane (66) configured to straighten an airflow into an axial direction between a combustion liner (42) and a flow sleeve (44) of a gas turbine combustor (16), wherein the airflow guide vane (66) comprises an upstream vane portion (102) and a downstream vane portion (104) at an angle relative to one another.

2. The system of claim 1, wherein the airflow guide vane (66) comprises an aerodynamic flow control surface.

3. The system of claim 2, wherein the aerodynamic flow control surface comprises an airfoil shape.

4. The system of claim 2 or 3, wherein the aerodynamic flow control surface comprises first (116) and second (118) surfaces disposed on opposite first (117) and second (119) sides of the airflow guide vane (66), the first surface extends (116) between a leading edge (68) and a trailing edge (70) on the first side (117) of the airflow guide vane (66), the second surface (118) extends between the leading edge (68) and the trailing edge (70) on the second side (119) of the airflow guide vane (66), and the first (116) and second (118) surfaces converge toward one another along an airflow path (82) toward the trailing edge (70).

5. The system of any of claims 1 to 4, wherein the angle (110) is between approximately 5 degrees and approximately 60 degrees.

6. The system of any of claims 1 to 5, further comprising:
a gas turbine combustor (16), the gas turbine combustor comprising:
a combustion liner (42) disposed about a combustion region (38);
a flow sleeve (44) disposed about the combustion liner (42);
an air passage (46) between the combustion liner (42) and the flow sleeve (44); and
wherein the airflow guide vane (66) is disposed in the air passage (46), the upstream vane portion (102) being oriented at an angle (110) from an axial axis (108) of the gas turbine combustor (16), and the downstream vane portion (104) being aligned with the axial axis (108), wherein the airflow guide vane (66) is further configured to remove a circumferential swirl of an airflow (64) upstream of the airflow guide vane (66) to straighten the airflow (64) downstream of the airflow guide vane (66) along the axial axis (108).

7. The system of claim 6, wherein the flow sleeve (44) comprises a plurality of air inlets (49) through a wall of the flow sleeve (44), and the airflow guide vane (66) is disposed adjacent the plurality of air inlets (49).

8. The system of claim 6 or 7, comprising a structure between the combustion liner (42) and the flow sleeve (44), wherein the structure obstructs the airflow through the air passage (46) downstream from the airflow guide vane, (66) and the airflow guide vane (66) is configured to reduce a wake in the airflow from the structure.

9. The system of claim 8, wherein the structure comprises a fuel injector, a cross-fire tube, a flame detector, a spark plug, a boss, a spacer, a pressure probe, a late lean injector, a sensor, or a combination thereof.

10. The system of any preceding claim, wherein the airflow guide vane (66) comprises a first circumferential cross-sectional width near the flow sleeve (44), a second circumferential cross-section width near the combustion liner (42), and the first circumferential cross-sectional width is greater than the second circumferential cross-sectional width.

11. The system of any preceding claim, wherein the airflow guide vane (66) is coupled to the flow sleeve (44) while the airflow guide vane (66) is offset from the combustion liner (42) by a gap, or the airflow guide vane (66) is coupled to the combustion liner (42) while the airflow guide vane (66) is offset from the flow sleeve (44) by the gap.

12. A method, comprising:
straightening an airflow in an air passage (46) between a combustion liner (42) and a flow sleeve (44) of a gas turbine combustor (16), wherein straightening comprises:
receiving the airflow (64) from a plurality of air inlets (49) in a wall of the flow sleeve (44) into the air passage (46);
receiving the airflow (64) at an upstream vane portion (102) of an airflow guide vane (66);
turning the airflow (64) from the upstream vane portion (102) to a downstream vane portion (104) of the airflow guide vane (66), wherein the upstream and downstream vane portions (102,104) are oriented at an angle (110) relative to one another; and
discharging the airflow (64) from the airflow guide vane (66) with a substantial reduction of swirl in the airflow (64).

13. The method of claim 12, wherein turning the airflow (64) comprises turning the airflow by the angle of approximately 5 degrees to approximately 60 degrees.

14. The method of claim 12 or 13, wherein receiving the airflow (64) at the upstream vane position (102) comprises aligning a direction of swirl with the upstream vane portion (102).

15. The method of any of claims 12 to 14, wherein discharging the airflow (64) comprises aligning the airflow with at least one structure (78) in the air passage (46) downstream from the airflow guide vane (66).
